# EUROPEAN PATENT SPECIFICATION

(11) **EP 2 618 031 B1**
(45) Date of publication and mention of the grant of the patent: **06.11.2019**
(21) Application number: 13151172.7
(22) Date of filing: 14.01.2013
(51) Int. Cl.: F16J 15/14, F01D 5/18, F01D 9/04, F01D 5/00, F01D 11/00, F01D 21/00, F01D 25/28, B29C 65/82, B29D 99/00, B29K 101/12

(54) **METHOD OF SEALING A NOZZLE GUIDE VANE TO A HOUSING**
VERFAHREN ZUR ABDICHTUNG EINER LEITSCHAUFEL GEGENÜBER EINEM GEHÄUSE.
PROCÉDÉ DE SCELLEMENT D'AUBE STATORIQUE A UN CARTER

(30) Priority: 19.01.2012 GB 201200845
(43) Date of publication of application: 24.07.2013
(73) Proprietor: Rolls-Royce plc, London SW1E 6AT (GB)
(72) Inventor: Michiel, Kopmels, Bristol, BS9 4JF (GB); Crowther, Simon, Goring, RG8 9BG (GB)
(74) Representative: Rolls-Royce plc

(56) References cited:
- EP-A1- 2 371 521
- JP-A- H06 229 867
- US-A1- 2004 221 659
- US-A1- 2005 242 470

## Description

### Background of the Invention

The present invention relates to a method of sealing a gap between a nozzle guide vane (NGV) and a fixture in the form of a housing used for flow checking purposes.

Hollow aerofoil components such as turbine blades and NGVs provided in gas turbine engines often comprise internal passages, which extend from the hollow interior of the blade to the exterior to provide a cooling air film in use, and thereby cool the surface of the component.

It is sometimes necessary to test the performance of such passages, for example to validate a new component design, or to diagnose blockages during engine overhaul or repair. A previous method of testing NGVs comprises placing the NGV to be tested in a tight fitting rubber or silicone housing, and clamping the housing against the NGV. However, such a method requires a relatively close fit between the housing and the NGV to be tested. Gas turbine engines typically comprise a large number of NGVs having slightly different dimensions, and so a large number of housings must be provided to test each NGV.

United States patent application US 2005/242470 A1 discloses a pinmat gap filler. The device heats and pressurises a thermoplastic and discharges it through a nozzle to fill gaps between grids of sharp pins called pinmats, which are used to provide acoustical surfaces in aircraft engine covers such as cowls or nacelles.

Japanese patent application JP H06 229867 A discloses a method for setting the shape of a gas turbine blade that simplifies conducting aerodynamic performance tests on such blades. The method involves pouring a liquid thermoplastic resin around the platform of a blade and hardening the resin.

United States patent application US 2004/221659 A1 discloses a moving blade support jig for supporting a gas turbine moving blade on a support apparatus for measurement of flow rate. The jig enables the flow of air to be uninterrupted during testing and without escape of air to the outside.

The present invention provides an improved method of sealing a nozzle guide vane against a housing used for flow checking purposes that addresses some or all of the aforementioned problems.

### Summary of the Invention

According to the present invention there is provided a method of sealing a nozzle guide vane to a housing for flow checking the nozzle guide vane within the housing, the method comprising: placing the nozzle guide vane into the housing; applying a thermoplastic material in a molten phase into a gap between the nozzle guide vane and the housing; and cooling the thermoplastic material to set the thermoplastic material and form a seal between the nozzle guide vane and the housing.

It has been found that by applying a thermoplastic material to the gap between a nozzle guide vane and a housing, a relatively large gap can be effectively sealed. As a result, a less precise alignment between the nozzle guide vane and the housing can be provided, which can still be sealed. This in turn has the effect that a single housing can be used for differently shaped NGVs. It has also been found that this method is capable of forming a robust seal, which cures in a relatively short time and can be melted and reformed to permit repair of a defective seal. It has been found that the seal is typically effective up to a pressure ratio of 2:1, which is the pressure typically required for NGV testing.

The method may comprise heating at least one of a surface of the nozzle guide vane and the housing, such that the heated surface is at an above ambient temperature while the thermoplastic material is applied to facilitate adhesion.

The method may comprise heating at least one of a surface of the nozzle guide vane and the housing to a temperature above 20°C while the thermoplastic material is applied to facilitate adhesion. The surface of the nozzle guide vane may be heated to between 50°C and 60°C. The heated surface may be heated by an air gun, and the air provided by the air gun may have a temperature of between 140°C and 170°C.

By heating the surface of the nozzle guide vane or the housing prior to applying the thermoplastic material, the time taken for the thermoplastic to solidify is increased. As a result, the thermoplastic material remains in its molten state for a longer duration, and so provides a larger wetted surface in contact with the surface of the nozzle guide vane and the housing, thereby leading to improved sealing between the two components.

The thermoplastic material may comprise Ethylene-vinyl acetate (EVA). The thermoplastic material may comprise Tec-Bond 240™, or may comprise Tec-Bond 260™.

The thermoplastic material may be applied with a base of the housing at an angle to the horizontal.

The method may comprise applying a thermoplastic material to one or more selected cooling holes in a molten phase and allowing the thermoplastic material to cool.

### Brief description of the drawings

The present invention will be more fully described by way of example with reference to the accompanying drawings, in which:
Figure 1a is a plan view of a nozzle guide vane and a housing sealed using a first method in accordance with the present invention;
Figure 1b is a side view along the line A-A of the method of Figure 1a;
Figure 2 is a side view of a second method in accordance with the present invention;
Figure 3a is a side view of an adhesive bead following solidification where the preheating step is employed; and
Figure 3b is a side view of an adhesive bead following solidification where the preheating step is not employed; and
Figure 4 is a perspective view of a nozzle guide vane.

### Detailed Description of the Preferred Embodiments

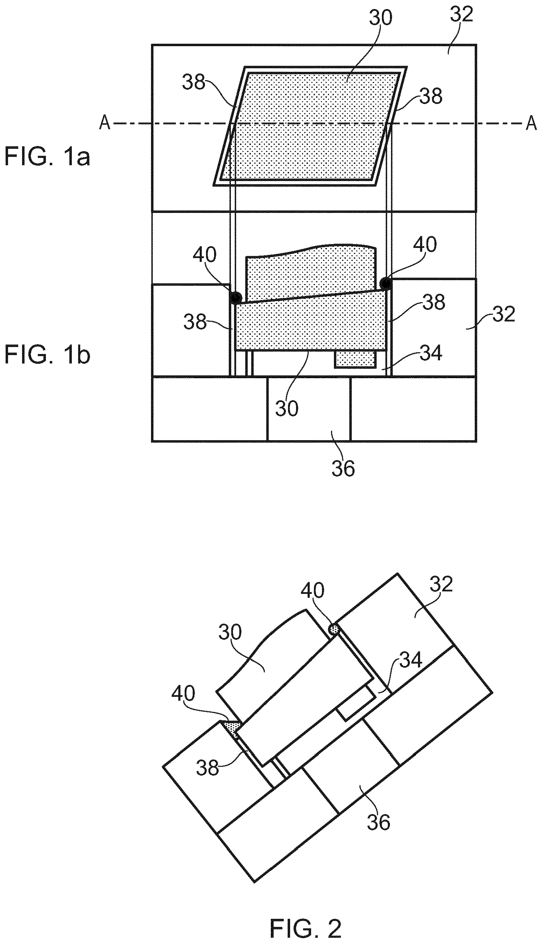

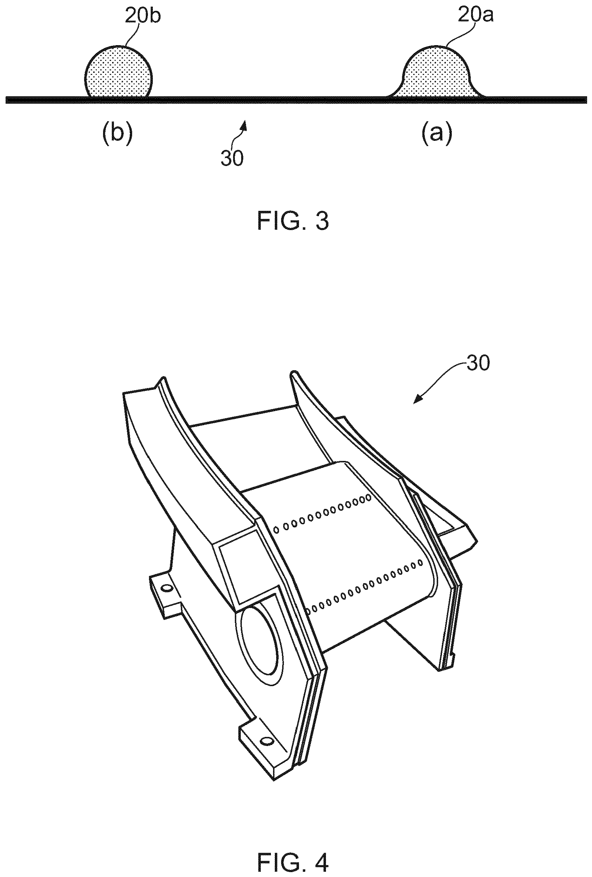

Figs. 1a and 1b show a first method of sealing a nozzle guide vane (NGV) 30 for a gas turbine engine (not shown), to a further component in the form of a housing 32. The NGV is shown in detail in Figure 4.

The NGV 30 comprises Nickel Alloy, with a surface coating of ceramic thermal barrier material. The NGV may alternatively be uncoated. The housing 32 is formed of a plastics material, and includes a cavity 34, shaped to correspond to an external profile of the NGV 30, and an aperture 36 for introducing compressed air to the cavity 34. In use, the NGV 30 is placed in the cavity 34 for testing.

The shape of the cavity 34 does not necessarily precisely correspond to the profile of the NGV 30, such that a gap 38 is generally defined between the edges of the cavity 34 and NGV 30. The gap 38 is generally 0.25 to 0.5mm wide when the NGV 30 is placed in the cavity 34. Such a gap 38 enables slightly different shaped NGVs to be tested in the same housing 32.

The gap 38 between the NGV 30 and the housing 32 is sealed using the following method. One or both of the NGV 30 and the housing 32 is heated to a temperature above 20°C, and preferably to a temperature of around 50°C to 60°C. The heating step could be carried out using any suitable process. For example, hot air could be applied to the NGV 30 using an air gun. Where an air gun is used, the hot air supplied by the air gun is supplied at a temperature of between 140°C and 170°C. This has been found to be sufficient to provide a surface temperature of 50°C to 60°C. Alternatively, the whole assembly (i.e. both the NGV 30 and the housing 32) could be placed in an oven (not shown) during the heating step. In a still further alternative, an electrical current could be conducted or induced in the NGV 30 to provide resistive or inductive heating.

Subsequent to the heating step, a bead 20a of thermoplastic material in the form of Tec-Bond 240™, or Tec-Bond 260™ thermoplastic hot melt adhesive in a molten phase (i.e. above the melting point of the material) is applied to the gap 38. The particular type of adhesive used will depend on a number of factors, including the required strength of the bond, and the properties of the NGV. Where the NGV comprises Nickel alloy having a ceramic thermal barrier coating, Tec-Bond 240™, or Tec-Bond 260™ have been found to be suitable. Applying the adhesive at a temperature of approximately 200°C has been found to result in the adhesive having the correct viscosity to cover the gap 38 without an excessive amount running into the cavity 36. The adhesive bead 20a is then allowed to cool to a temperature of around 20°C and set, i.e. solidify, to form a seal between the NGV 30 and housing 32 across the gap 38. The cooling time may be controlled by, for instance, controlling the ambient temperature or air flow around the NGV 30 and housing 32.

Alternatively, the heating step could be omitted, and a bead 20b of thermoplastic material could be applied with both of the NGV 30 and housing 32 at ambient temperature, i.e. around 20°C, and allowed to cool.

Figs. 3(a) and 3(b) show the beads 20a, 20b applied with and without the heating step respectively. The heating step results in one or both of the NGV 30 and housing 32 being at a higher temperature (i.e. around 50°C to 60°C) when the adhesive bead 20a is applied, relative to when the heating step is omitted, where the NGV 30 and housing 32 would be at room temperature (i.e. around 20°C). As a result of the heating step, the bead 20a cools more slowly and more evenly than when the heating step is omitted, resulting in the bead 20a remaining in the molten phase for a longer period in comparison to the bead 20b. As a result, the bead can spread further into the gap 38 before solidifying, thereby resulting in a larger surface area of the bead 20a in contact with the edges of the NGV 30 and housing 32, thereby forming an improved seal. However, such a heating step increases the time taken to seal the gap 38 due to both the time taken to heat the NGV 30 and or housing 32, and the longer cooling time required for the adhesive to set. Generally, the NGV 30 requires heating to ensure good adhesion, though it has been found that where the housing 32 comprises a plastics material, heating of the housing 32 is not necessary to provide good adhesion.

In contrast, where the heating step is omitted, part of the bead 20b in contact with the edges of the NGV 30 and housing 32 cools very quickly when applied. As a result, the part of the bead 20b in contact with the edges of the NGV 30 and housing 32 solidifies very quickly and contracts, resulting in a more spherical, less flattened shape relative to bead 20a, and thus a lower area in contact with the surface 22. The rounded shape of the bead 20b is also easier to peel off relative to the flattened shape of the bead 20a.

Fig. 2 shows a second method of sealing a nozzle guide vane (NGV) 30, to a housing 32. The NGV 30 and housing 32 are the same as used in the method described in relation to Figs, 1a and 1b, but the adhesive is applied with the base of the housing 32 at an angle to the horizontal, such that the adhesive runs into the gap 38 on the lower side of the housing 32. This method has been found to provide an improved seal relative to when the adhesive is applied with the base parallel to the horizontal, since a thicker bead 40 can be provided.

Once the adhesive bead 20 has solidified, the NGV 30 can be tested by passing compressed air into the housing 32 through the aperture 36. If the seal is found to be defective however, i.e. some air is able to pass through the gap 38 during testing, the seal can be repaired. This can be done either by adding further material as above, or by applying localised heat (for example using a soldering iron or glue gun tip) to the defective bead 20, such that it is heated above its melting point. The melted bead 20 is then allowed to flow across the gap 38 to thereby cover the defect. The repaired bead 20 is then allowed to cool, and the NGV 30 can be tested again. The present invention therefore permits the seal to be repaired, without removing or necessarily adding further material to the blade. This method thereby saves time in comparison to prior sealing methods, in which the sealant has to be removed and reapplied where a defective seal is found.

Once testing is complete, the adhesive bead 20 can be removed by hand, by peeling the solidified adhesive from the gap 38. The NGV 30 may be heated to soften or partially melt the adhesive to facilitate removal. Once removed, very little residue remains. The residue has been found not to gas turbine engine components, and is generally burned off during operation of the gas turbine engine.

While the invention has been described in conjunction with the examples described above, the examples are considered to be illustrative and not limiting.

For example, where the NGV includes film cooling holes, the thermoplastic material could be applied to one or more of the cooling holes to seal these for testing. Different thermoplastics could be used for sealing the holes, depending on the required adhesion properties. In particular, this will be dependent on the pressures used during testing, as higher pressures will require a stronger adhesion. The method could also be used to join other components such as turbine blades. The component for testing and the housing could be made from substantially any materials, and different adhesives and preheating steps may be required for different materials. However the invention has been found to work particularly well for Nickel alloy components and plastics material housings.

## Claims

1. A method of sealing a nozzle guide vane (30) to a housing (32) for flow checking the nozzle guide vane within the housing, the method comprising:
placing the nozzle guide vane (30) into the housing (32);
applying a thermoplastic material in a molten phase into a gap (38) between the nozzle guide vane and the housing; and
cooling the thermoplastic material to set the thermoplastic material and form a seal between the nozzle guide vane and the housing.

2. A method according to claim 1, wherein the method comprises heating at least one of a surface of the nozzle guide vane (30) and the housing (32), such that the heated surface is at an above ambient temperature while the thermoplastic material is applied to facilitate adhesion.

3. A method according to claim 2, wherein the heated surface is heated to between 50°C and 60°C.

4. A method according to any preceding claim, wherein the thermoplastic material is applied with a base of the housing (32) at an angle to the horizontal.

5. A method according to any preceding claim, wherein the method further comprises applying a thermoplastic material to one or more selected cooling holes in a molten phase and allowing the thermoplastic material to cool.

6. A method according to any preceding claim, wherein the thermoplastic material comprises ethylene-vinyl acetate.

## Patentansprüche

1. Verfahren zum Abdichten einer Leitschaufel (30) an einem Gehäuse (32) zur Strömungsprüfung der Leitschaufel in dem Gehäuse, wobei das Verfahren folgendes umfasst:
Platzieren der Leitschaufel (30) in dem Gehäuse (32);
Applizieren eines thermoplastischen Materials in einer geschmolzenen Phase in einem Zwischenraum (38) zwischen der Leitschaufel und dem Gehäuse; und
Abkühlen des thermoplastischen Materials, um das thermoplastische Material auszuhärten und um eine Dichtung zwischen der Leitschaufel und dem Gehäuse zu bilden.

2. Verfahren nach Anspruch 1, wobei das Verfahren das Erhitzen mindestens einer Fläche der Leitschaufel (30) oder des Gehäuses (32) umfasst, so dass die erhitzte Fläche oberhalb der Umgebungstemperatur liegt, während das thermoplastische Material appliziert wird, um die Adhäsion zu erleichtern.

3. Verfahren nach Anspruch 2, wobei die erhitzte Fläche auf 50 °C bis 60 °C erhitzt wird.

4. Verfahren nach einem der vorstehenden Ansprüche, wobei das thermoplastische Material appliziert wird, wobei eine Basis des Gehäuses (32) in einem Winkel zu der Horizontalen angeordnet ist.

5. Verfahren nach einem der vorstehenden Ansprüche, wobei das Verfahren ferner das Applizieren eines thermoplastischen Materials auf ein oder mehrere ausgewählte Kühlöffnungen in einer geschmolzenen Phase umfasst sowie ferner das Abkühlen des thermoplastischen Materials.

6. Verfahren nach einem der vorstehenden Ansprüche, wobei das thermoplastische Material Ethylenvinylacetat umfasst.

## Revendications

1. Procédé de scellement d'une aube directrice (30) à un boîtier (32) pour soumettre à une vérification d'écoulement l'aube directrice dans le boîtier, le procédé comprenant les étapes consistant à :
placer l'aube directrice (30) dans le boîtier (32) ;
appliquer une matière thermoplastique en phase fondue dans un espace (38) entre l'aube directrice et le boîtier ; et
refroidir la matière thermoplastique pour faire prendre la matière thermoplastique et former un joint d'étanchéité entre l'aube directrice et le boîtier.

2. Procédé selon la revendication 1, le procédé comprenant l'étape consistant à chauffer une surface de l'aube directrice (30) et/ou le boîtier (32), de sorte que la surface chauffée soit à une température supérieure à la température ambiante pendant que la matière thermoplastique est appliquée pour faciliter l'adhésion.

3. Procédé selon la revendication 2, la surface chauffée étant chauffée à une température comprise entre 50 °C et 60 °C.

4. Procédé selon l'une quelconque des revendications précédentes, la matière thermoplastique étant appliquée avec une base du boîtier (32) à un angle par rapport à l'horizontale.

5. Procédé selon l'une quelconque des revendications précédentes, le procédé comprenant en outre les étapes consistant à appliquer une matière thermoplastique à au moins un trou de refroidissement sélectionné dans une phase fondue et à permettre à la matière thermoplastique de refroidir.

6. Procédé selon l'une quelconque des revendications précédentes, la matière thermoplastique comprenant de l'acétate de vinyle-éthylène.
